# EUROPÄISCHE PATENTANMELDUNG

(11) **EP 2 058 104 A2**
(43) Veröffentlichungstag der Anmeldung: **13.05.2009**
(21) Anmeldenummer: 08167788.2
(22) Anmeldetag: 29.10.2008
(51) Int. Cl.: B29C 44/34, B29C 44/42

(54) **Verfahren zur Herstellung von Transportpaletten aus Kunststoff**

(30) Priorität: 29.10.2007 DE 102007051939
(71) Anmelder: Koenes, Achim, 42349 Wuppertal (DE)
(72) Erfinder: Koenes, Achim, 42349 Wuppertal (DE)
(74) Vertreter: Bonsmann, Joachim Bernhard

(57) **Zusammenfassung**

Die Erfindung betrifft ein Verfahren zur Herstellung von Transportpaletten aus einer Mischung von recycelten Kunststoffen und optional faserigem Material, wobei die Mischung in einen Extruder (1) portioniert, durch Erhitzung cremig verflüssig und über die Förderschnecke des Extruders zum Aushärten in eine geschlossene Form (9) eingebracht wird. Dabei wird die verflüssigte Mischung aus dem Extruder in einer Speichereinrichtung (4) mit veränderlichem Volumen zwischengespeichert, solange die Form gewechselt wird.

## Beschreibung

Die Erfindung betrifft ein Verfahren zur Herstellung von Transportpaletten gemäß dem Oberbegriff des Patentanspruchs 1. Ein derartiges Verfahren zur Herstellung von Transportpaletten aus einer Mischung von recycelten Kunststoffen und zusätzlich einem faserigem Material ist aus der EP 1 606 178 B1 bekannt, deren Inhalt - auch hinsichtlich der Ausgestaltung entsprechender Transportpaletten - durch Bezugnahme hierin aufgenommen wird.

Das bekannte Verfahren zur Herstellung von Transportpaletten aus Kunststoff verwendet recycelte Kunststoffe unter Zusatz von organischen Fasern, vorzugsweise Zellulosefasern und alternativ oder zusätzlich Hanffasern. Damit wird eine Art Mikroarmierung des Kunststoffes geschaffen, wodurch die Zug- und Biegefestigkeit und damit die Stabilität des Materials signifikant verbessert wird. Als recycelte Kunststoffe kommen beispielsweise Gemische aus Polyethylen und/oder Polypropylen und/oder Polycarbonaten in Betracht, die einen Fremdstoffanteil von nicht mehr als 10% (Volumenanteil) aufweisen. Derartige Kunststoffe sind in Deutschland durch das sog. Verpackungsrecycling in großen Mengen verfügbar. Die verwendeten Zellulosefasern weisen bevorzugt eine mittlere Faserlänge im Bereich von 0,5 bis 3 mm, vorzugsweise 1 bis 2 mm, besonders bevorzugt von etwa 1,4 mm auf. Der mittlere Durchmesser liegt im Bereich von 10 bis 100 Mikrometern, vorzugsweise bei etwa 60 Mikrometern. Daraus ergibt sich eine typische Faserzugfestigkeit von wenigstens etwa 1 N/mm². Der Volumenanteil an Fasern liegt zwischen 3% und 50%, bevorzugt zwischen 10% und 20%, besonders bevorzugt bei etwa 15% (d.h. 15% Fasern und 85% Kunststoffmischung). Der exakt eingesetzte Anteil hängt von der Qualität des recycelten Kunststoffgemisches und den Anforderungen an die Traglasten der Palette ab. Tendenziell steigt die Stabilität des Kunststoffmaterials mit zunehmendem Faseranteil an.

Je größer der Faseranteil bzw. die Faserlänge, desto problematischer ist jedoch die Verarbeitung der Mischung von recycelten Kunststoffen und faserigem Material. Übliche Spritzgussverfahren können nämlich nicht verwendet werden, da Spritzgussmaschinen mit ihren feinen Düsen durch das inhomogene Material leicht verstopfen würden und derartig große einstückige Gegenstände wie Transportpaletten in Spritzgusstechnik im Übrigen nicht wirtschaftlich hergestellt werden können. Vielmehr verwendet man eine Gusstechnik, bei der die Materialmischung in einem Extruder pastös gemacht und in Aluminiumformen gepresst wird. Nach dem vollständigen Befüllen der Formen, was je nach Form durch mehrere Befüllungsöffnungen erfolgt, werden die Formen von dem Extruder abgedockt, um den Kunststoff dann über einen gewissen Zeitraum von beispielsweise einer halben Stunde auskühlen zu lassen, statt das gespritzte Werkstück sogleich auszustoßen, wie es bei Spritzgusstechniken der Fall ist.

Bei dem bislang verwendeten Verfahren zur Herstellung der aus der EP 1 606 178 B1 bekannten Transportpaletten ist es jedoch nachteilig, dass zum Wechsel der Gussformen bzw. zum Andocken einer anderen Füllöffnung der Extruder angehalten werden muss. Dies führt zu einem längeren Aufenthalt der pastösen Kunststoffmasse in den beheizten Teilen der Vorrichtung und kann - insbesondere bei der Herstellung relativ heller Paletten - zu Verfärbungen des Kunststoffmaterials führen. Außerdem können die Eigenschaften des in seiner Zusammensetzung aufgrund der Verwendung von recycelten Materialien schwankenden Kunststoffgemisches variieren, so dass die negativen Effekte bei längerem Verweilen in der Extrudereinrichtung unterschiedlich stark ausgeprägt sein können. Außerdem führt der fehlende Kunststofffluss während des Formenwechsels zu einer geringeren Effizienz der Gesamtanlage.

Eine Aufgabe der vorliegenden Erfindung besteht daher darin, einen gleichmäßigen Betrieb des Extruders auch bei einem notwendigen Formenwechsel zu ermöglichen.

Diese Aufgabe wird bei einem gattungsgemäßen Verfahren durch die kennzeichnenden Merkmale des Patentanspruchs 1 gelöst.

Vorteilhafte Ausgestaltungen der Erfindung ergeben sich aus den Unteransprüchen.

Bei dem erfindungsgemäßen Verfahren werden Speichereinrichtungen mit veränderlichem Volumen verwendet, die in ihrer Funktion den sog. "Akkuköpfen" oder "Speicherköpfen" ähneln, wie sie z.B. aus der DE 692 18 610 T2 für das Extrusionsblasformen bekannt sind.

Um ungleichmäßige Verweilzeiten der Kunststoffmasse in dem Akkukopf zu vermeiden, ist es außerdem bekannt, Akkuköpfe mit einer sog. FIFO (first in - first out) zu versehen. Dabei wird mit Hilfe eines Ringkolbens das zuerst in den Akkukopf eingeleitete Material auch bei der Entnahme zuerst wieder abgegeben.

Beim Extrusionsblasformen dient der Akkukopf der Zwischenspeicherung von Kunststoffmasse für die Zeit, während der keine Form angedockt ist. Doch werden beim Akkukopf-Extrusionsblasformen ähnlich hohe Drücke verwendet wie beim Spritzguss, wo bis zu 1000 bar üblich sind, und die Füllzeiten der Form sind ebenfalls sehr kurz, da der Vorformling beim Blasformen heiß sein muss.

Auch beim Spritzgießen werden gelegentlich Akkuköpfe verwendet, doch dienen sie in diesem Fall nur als eine Art Sicherheitsbehälter, der Kunststoffmasse aufnimmt, die gerade nicht vom Extruder in die Form geleitet werden kann. Außerdem wird beim Spritzgießen die eingespritzte Menge Kunststoff außer durch die Einspritzzeit im Wesentlichen durch das Volumen der Form begrenzt.

Im Unterschied dazu wird bei der Erfindung die Kunststoffmasse stets zunächst in die Speichereinrichtung geleitet. Dies hat den folgenden Vorteil: Der Durchfluss durch den Extruder lässt sich konventionell nicht völlig exakt bestimmen, so dass man bei der Herstellung von Kunststoffpaletten bisher nie genau wusste, welches Kunststoffvolumen bislang in die Formen geflossen ist. Der Gießvorgang galt bislang als beendet, wenn aus allen Öffnungen der Formen Kunststoffmasse quoll, was visuell festgestellt wurde. Mit der erfindungsgemäßen Speichereinrichtung kann man die Kunststoffmasse jedoch sehr genau dosieren, bei einer Speichereinrichtung mit Zylinder und Kolben z.B. über den Vorschub des Kolbens im Zylinder, und somit kann man die Formen exakter und vor allem automatisiert füllen. Dies geschieht so, dass zunächst das gewünschte Volumen in die Speichereinrichtung eingelassen und dann in die Form abgeführt wird, d.h. die Speichereinrichtung ist so ausgelegt, dass sie das ganze Gießvolumen einer Form von z.B. 20 Litern fassen kann.

Bei der Erfindung sind die Anforderungen an die Druckerzeugungs- und Förderleistung von Extruder und Akkukopf und an die Druckfestigkeit der Formen sehr viel geringer als beim Spritzgießen und auch deutlich geringer als beim Extrusionsblasformen, was gerade bei der zur Herstellung von Transportpaletten nötigen Größe von Extruder, Akkukopf und Formen wesentliche Einsparungen mit sich bringt.

Ferner ist im Rahmen der Erfindung vorgesehen, dass während oder nachdem die verflüssigte Mischung aus dem Extruder in die Speichereinrichtung gefördert wird, der Mischung ein Treibmittel zugesetzt wird, welches bei der Temperatur der verflüssigten Mischung während deren Verweilzeit in der Speichereinrichtung ein in kleinen Blasen verteiltes Gas entwickelt, welches der Transportpalette eine Schaumstruktur verleiht. Hierdurch kann eine gewisse Poren aufweisende bzw. hartschaumartige Struktur erzielt werden und durch die damit einhergehende Dichtereduktion bei vorgegebenem Volumen der für die Paletten erforderliche Materialeinsatz und somit auch das Leergewicht der Paletten deutlich reduziert werden. Eine derartige Dichtereduktion ist gegenüber einer Volumenreduktion der Palette vorzuziehen, da die Geometrie der Palette aufgrund bestimmter Randbedingungen (Untergreifbarkeit mit Flurförderfahrzeugen etc.) festgelegt ist.

Je nach Einsatzmenge und Art des Treibmittels sind Gewichtsreduktionen von ca. 5% bis ca. 50% zweckmäßig. Es hat sich ergeben, dass auch bei einer derart aufgeschäumten Kunststoffmischung die erforderlichen Stabilitätswerte der Paletten noch ohne Weiteres gewährleistet werden können. Die gewünschte Gewichtsreduktion kann durch unterschiedlich dosierte Treibmittelzugaben und entsprechend darauf abgestimmte Dosierung der Kunststoffmasse prinzipiell ohne Umrüstung der Anlage angepasst werden, so dass je nach Bedarf auf einer Anlage ohne zusätzliche Rüstzeiten Paletten unterschiedlicher Gewichtsklassen und Tragfähigkeiten hergestellt werden können.

Insbesondere bei Zugabe von Treibmitteln kann auch auf den Zusatz von Faserbestandteilen zu der der recycelten Kunststoffmischung verzichtet werden.

Im Rahmen der vorliegenden Erfindung hat sich insbesondere die Kombination eines Akkukopfes, in dem das Treibmittel mit definierter Verweilzeit und unter einem definiertem, eine ausreichende Blasenexpansion erlaubenden Druck wirken kann, mit einer verhältnismäßig druckarmen und langsamen Zufuhr der aufgeschäumten Kunststoffmasse in die Form als vorteilhaft herausgestellt. Hierdurch wird nämlich zum einen eine optimale Expansion auch weniger wirksamer Treibmittel erreicht, und zum anderen der Kunststoffmasse genügend Zeit gegeben, die oberflächenseitigen Poren vor dem endgültigen Erstarren zu schließen, so dass ausreichend glatte, kompakte und auch unter Hygieneaspekten zufriedenstellende Außenhäute entstehen.

Bei den Treibmitteln kann es sich sowohl um chemische als auch um physikalische Treibmittel handeln. Die Treibmittel können weiterhin in verschiedenen Formen und Aggregatzuständen, z.B. als Flüssigkeiten, Gele, Pulver oder als Masterbatches, bei denen die Treibmittel auf ein Granulat aufgetrommelt sind, eingesetzt werden.

Ein chemisches Treibmittel, das auch im Lebensmittelbereich eingesetzt werden kann, ist beispielsweise Natriumbicarbonat in Verbindung mit Zitronensäure oder deren Derivaten. Ein derartiges zitronensäurebasiertes Treibmittel hat im Vergleich zu anderen bekannten Treibmitteln, die z.B. Ammoniak freisetzen und daher nur bedingt lebensmitteltauglich sind, den Nachteil, dass der Treibeffekt bei normaler Verarbeitung innerhalb von Extrudern vielfach zu gering ist. Im Rahmen der Erfindung kann jedoch das Treibmittel im Akkukopf unter speziell angepassten Druckverhältnissen und für vorgegebene Zeiten kontrolliert expandieren, so dass auch mit Treibmitteln mit geringerer Wirksamkeit bzw. Druckerzeugungsfähigkeiten hinreichende Aufschäumungen erzielbar sind.

Die Treibmittel werden der Kunststoffmasse bevorzugt zugesetzt, wenn die Kunststoffmasse aus dem Extruder in die Speichervorrichtung befördert wird, da dann dem Treibmittel eine definierte Zeit zur Expansion bei einem definierten, im Vergleich zu den Druckverhältnissen im Extruder niedrigem Druck zur Verfügung steht. Alternativ kann die Zugabe auch zu einem späteren Zeitpunkt, insbesondere bei der Ausgabe der Kunststoffmasse in die Form erfolgen. Ungünstiger ist die Zugabe des Treibmittels bereits im Extruder, wenngleich dies bei Treibmitteln, die entsprechend stabil sind, ebenfalls grundsätzlich möglich ist.

Auch wenn im Rahmen der Erfindung bevorzugt mit Treibmitteln aufgeschäumte Kunststoffe verwendet werden, kann ein kontinuierlicher Befüllungsvorgang im Rahmen eines anderen Aspekts der vorliegenden Erfindung auch unter Verwendung nicht aufgeschäumter Kunststoffe aufgrund der Speichereinrichtung mit niedrigen Drücken von 50 bar, bevorzugt weniger als 30 bar, erzielt werden.

Sowohl bei der Verwendung aufgeschäumter Recycling-Kunststoffe - bei stärkeren Aufschäumungen bevorzugt ohne den Zuschlag von Faserbestandteilteilen - als auch bei nicht aufgeschäumten Recycling-Kunststoffen - bevorzugt mit Zuschlag zusätzlicher Faserbestandteile - ist das erfindungsgemäße Konzept unter Einsatz einer Speichereinrichtung vorteilhaft, und zwar bei den faserhaltigen Kunststoffen insbesondere im Hinblick auf die Vermeidung von Düsenverstopfungen und bei treibmittelhaltigen Kunststoffen insbesondere im Hinblick auf den kontrollierte Aufschäumvorgang und die Verwendbarkeit schwächerer bzw. weniger druckerzeugender Treibmittel. Selbstverständlich können jedoch Aufschäumung und Faserzusatz auch kombiniert werden.

Die Erfindung wird nachfolgend anhand der Zeichnungen beispielhaft näher erörtert. Es zeigen:
- Fig. 1: eine Prinzipskizze einer Anlage zur Herstellung von Transportpaletten aus Kunststoff in einem ersten Ausführungsbeispiel; und
- Fig. 2: eine Prinzipskizze einer Anlage zur Herstellung von Transportpaletten aus Kunststoff in einem zweiten Ausführungsbeispiel.

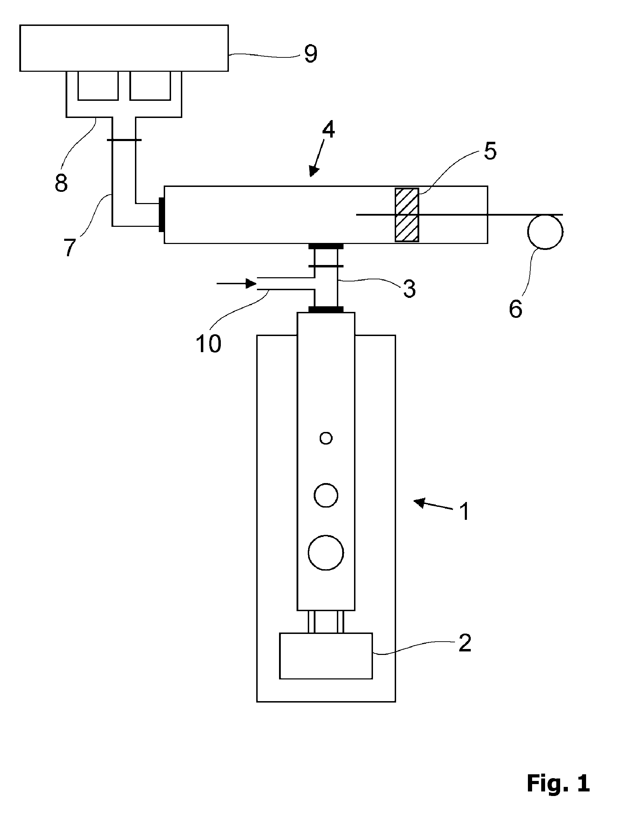

Die in Fig. 1 gezeigte Anlage umfasst einen Extruder 1, der von einem Elektromotor 2 angetrieben wird. Unter dem Extruder 1 ist hier lediglich eine Einrichtung zur Kunststoffverflüssigung und -förderung zu verstehen. Irgendwelche Einrichtungen zur Erzeugung von besonders hohem Druck wie in der Spritzgusstechnik sind hier nicht erforderlich.

Ein Auslass des Extruders 1 ist über eine Rohrleitung 3 mit einem Einlass einer Speichereinrichtung 4 mit veränderlichem Volumen verbunden, die nachfolgend Kartusche genannt wird und schematisch als ein Zylinder gezeichnet ist, in dem ein Kolben 5 mittels einer Spindel und eines Elektromotors 6 hin- und her schiebbar ist, um das Volumen der Kartusche 4 zu verändern. Die Kartusche 4 hat eine FIFO-Funktion.

Ein Auslass der Kartusche 4 ist über eine Rohrleitung 7 und einen Verteiler 8 mit einer Aluminiumform 9 für Kunststoffpaletten verbunden.

In den Rohrleitungen 3 und 7 befinden sich Ventile, die mit Querstrichen in den Rohrleitungen angedeutet sind. Die Rohrleitung 3 weist außerdem einen Zweiganschluss 10 auf, dessen Funktion später erläutert wird.

### Die in Fig. 1 gezeigte Vorrichtung arbeitet wie folgt:

Im Extruder 1 wird eine Mischung von recycelten Kunststoffen und faserigem Material portioniert, durch Erhitzung cremig verflüssig und über die Förderschnecke des Extruders 1 in die Kartusche 4 gefördert. Während dieses Vorgangs, bei dem das Ventil in der Rohrleitung 3 offen ist und das Ventil in der Rohrleitung 7 geschlossen ist, wird eine leere Aluminiumform 9 am Verteiler 8 angeschlossen. Anschließend wird das Ventil in der Rohrleitung 7 geöffnet, und die in der Kartusche 4 angesammelte Materialmenge wird mit einem Druck von weniger als 50 bar, bevorzugt weniger als 30 bar, verhältnismäßig langsam, d.h. über eine Zeitspanne von einigen Minuten, aus der Kartusche 4 in die Aluminiumform 9 gepresst. Wenn die Aluminiumform 9 voll ist, wird sie bei geschlossenem Ventil in der Rohrleitung 7 vom Verteiler 8 abgekoppelt und zwecks Aushärtung mit Wasser gekühlt, während die Kartusche 4 wieder über die Rohrleitung 3 aus dem Extruder 1 befüllt wird. Derweilen wird eine leere Aluminiumform 9 am Verteiler 8 angeschlossen, usw.

In einer Variante des Verfahrens wird der Mischung zwischen dem Extruder 1 und der Kartusche 4 eine bestimmte Menge Treibmittel zugesetzt, welches die Eigenschaft hat, bei bestimmten Temperaturen (z.B. ca. 180 °C) ein Gas zu erzeugen, wobei in diesem Falle der Faserbestandteil bevorzugt weggelassen wird. Das Treibmittel wird über den Zweiganschluss 10 in der eingezeichneten Pfeilrichtung eingespeist und wird durch nicht eingezeichnete Düsen in der Mischung verteilt. Während sich die Mischung eine definierte Zeit lang in der Kartusche 4 befindet, setzt das Treibmittel eine definierte Menge Gas frei, so dass die anschließend in die Form 9 geleitete und dort erstarrte Mischung außer recycelten Kunststoffen und faserigem Material auch eine definierte Menge Gas in Form von kleinen Blasen enthält. In dieser Variante ist die der Kartusche 4 zugeführte Menge Kunststoffe natürlich entsprechend zu verringern.

Somit wird eine Schaumstruktur in der fertigen Transportpalette erzeugt, wodurch diese bei fast gleichbleibender Festigkeit wesentlich leichter sein kann und mit wesentlich weniger Materialaufwand hergestellt werden kann als eine massive Transportpalette.

Man beachte, dass ein Zusatz des Treibmittels im Extruder 1 nicht zweckmäßig wäre, da in diesem Fall angesichts variabler Drücke und ungewisser Verweilzeiten darin keine reproduzierbare Blasenbildung in der Mischung möglich wäre.

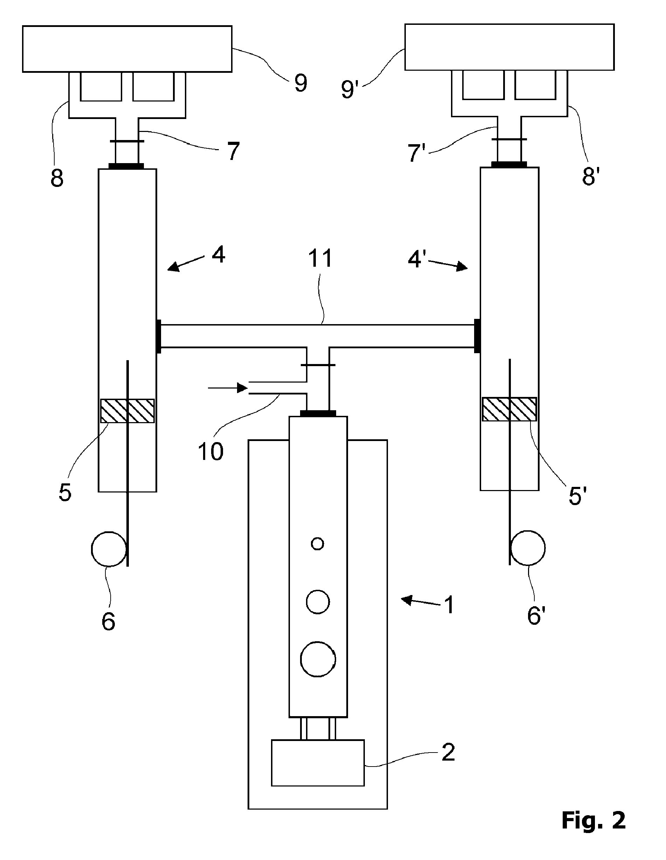

Die in Fig. 2 gezeigte Anlage ermöglicht ein kontinuierliches Befüllen zweier Formen 9 gleichzeitig. Hierbei sind die Einrichtungen der in Fig. 1 gezeigten Anlage - mit Ausnahme des Extruders 1, der vorzugsweise in etwa die doppelte Leistung wie der Extruder aus Figur 1 aufweist, und mit Ausnahme des dem Extruder zugeordneten Elektromotors 2 - doppelt vorgesehen, wobei bau- und funktionsgleiche Bestandteile gegenüber Fig. 1 mit denselben Bezugszeichen bzw. in ihrer zweiten Version mit daran angefügtem Apostroph versehen sind. Die der Rohrleitung 3 in Fig. 1 entsprechende Rohrleitung ist in Fig. 2 ein Verteiler 11 vom Extruder zu den beiden Kartuschen 4 und 4'.

Die in Fig. 2 gezeigte Vorrichtung arbeitet grundsätzlich ebenso wie die Vorrichtung von Fig. 1, jedoch mit abwechselnden Andocken und Füllen zweier Formen 9, 9', wobei die Kartuschen 4 und 4' aus dem gemeinsamen Extruder 1 mit der Mischung beschickt werden. Und zwar wird zunächst die benötigte Menge Kunststoffmasse in die Kartusche 4 gefördert, und sobald eine vorgegebene Menge Kunststoffmasse darin erreicht ist, wird der Extruder mit der anderen Kartusche 4' verbunden, und während die andere Kartusche 4' gefüllt wird, wird der Inhalt der die ersten Kartusche 4 in die Form 9 ausgestoßen. Dieser Ausstoßvorgang ist einschließlich des anschließenden Formenwechsels beendet, bevor die andere Kartusche 4' gefüllt ist.

## Patentansprüche

1. Verfahren zur Herstellung von Transportpaletten aus einer recycelte Kunststoffe enthaltenden Mischung, wobei die Mischung in einen Extruder (1) portioniert, durch Erhitzung cremig verflüssig und über die Förderschnecke des Extruders zur Aushärtung in eine geschlossene Form (9) eingebracht wird,
**dadurch gekennzeichnet, dass,**
während eine leere Form an eine Speichereinrichtung (4) mit veränderlichem Volumen angeschlossen wird, die verflüssigte Mischung aus dem Extruder in die Speichereinrichtung gefördert wird, bis sich eine definierte, dem Volumen der Form entsprechende Menge der Mischung in der Speichereinrichtung angesammelt hat, und dass nach Anschluss der Form die in der Speichereinrichtung angesammelte Mischungsmenge in einem Zuge aus der Speichereinrichtung in die Form gepresst wird, und dass während oder nachdem die verflüssigte Mischung aus dem Extruder (1) in die Speichereinrichtung (4) gefördert wird, der Mischung ein Treibmittel zugesetzt wird.

2. Verfahren nach Anspruch 1,
**dadurch gekennzeichnet, dass**
die in der Speichereinrichtung angesammelte Mischungsmenge aus der Speichereinrichtung mit einem Druck von weniger als 50 bar, bevorzugt weniger als 30 bar, in die Form gepresst wird.

3. Verfahren nach Anspruch 1 oder 2,
**dadurch gekennzeichnet, dass**
die Materialmenge über eine Zeitspanne von mehr als einer Minute und bevorzugt weniger als zwei Minuten, in die Form (9) gepresst wird.

4. Verfahren nach einem der Ansprüche 1 bis 3,
**dadurch gekennzeichnet, dass**
die Speichereinrichtung (4) die Materialmenge auf eine solche Weise speichert, dass das zuerst von der Speichereinrichtung aufgenommene Material auch zuerst wieder ausgepresst wird.

5. Verfahren nach einem der vorhergehenden Ansprüche,
**dadurch gekennzeichnet, dass**
die Materialmenge in eine als Aluminiumform ausgebildete geschlossene Form (9) gepresst wird, und die von der Speichereinrichtung (4) abgekoppelte Form zwecks Aushärtung mit Wasser gekühlt wird.

6. Verfahren nach einem der vorhergehenden Ansprüche,
**dadurch gekennzeichnet, dass**
erste und zweite Speichereinrichtungen (4, 4') zum abwechselnden Andocken und Füllen zweier Formen vorgesehen sind, wobei die Speichereinrichtungen aus einem gemeinsamen Extruder (1) abwechselnd mit der Mischung beschickt werden.

7. Verfahren nach einem der vorhergehenden Ansprüche,
**dadurch gekennzeichnet, dass**
der Mischung aus recycelten Kunststoffen faseriges Material zugesetzt ist.

8. Verfahren nach Anspruch 7,
**dadurch gekennzeichnet, dass**
das faserige Material im Wesentlichen aus Zellulose- und/oder Hanffasern besteht, wobei die mittlere Faserlänge in dem faserigen Material bevorzugt mindestens 0,5 mm beträgt.

9. Verfahren nach Anspruch 7 oder 8,
**dadurch gekennzeichnet, dass**
der Volumenanteil des faserigen Materials in der Mischung mindestens 10% beträgt.

10. Verfahren nach einem der vorhergehenden Ansprüche,
**dadurch gekennzeichnet, dass**
der Treibmittelzusatz zu einer Gewichtsreduktion der fertigen Transportpaletten zwischen ca. 5% und ca. 50% führt.
